# EUROPEAN PATENT APPLICATION

(11) **EP 4 830 992 A1**
(43) Date of publication of application: **28.10.2026**
(21) Application number: 25775231.1
(22) Date of filing: 27.03.2025
(51) Int. Cl.: B60N 2/225

(54) **ANGLE ADJUSTING APPARATUS FOR SMALL-TOOTH-DIFFERENCE PLANETARY GEAR SYSTEM**

(30) Priority: 28.03.2024 CN 202410362916
(71) Applicant: Keiper (Changshu) Seating Mechanisms Co., Ltd., Suzhou, Jiangsu 215558 (CN)
(72) Inventor: LI, Cong, Suzhou, Jiangsu 215558 (CN); HE, Ping, Suzhou, Jiangsu 215558 (CN); LIANG, Hongbing, Suzhou, Jiangsu 215558 (CN); TANG, Yunhua, Suzhou, Jiangsu 215558 (CN)
(74) Representative: Hauck Patent- und Rechtsanwälte PartmbB
(86) International application number: PCT/CN2025/085427
(87) International publication number: WO 2025/201473

(57) **Abstract**

The present invention relates to an angle adjustment device of a planetary gear train with small teeth difference. The angle adjustment device comprises a wedge block (5), a drive cam (6) and an elastic member (9), wherein the wedge block (5) includes two wedge segments (5.1, 5.2); the drive cam (6) has a drive segment (6.2), which (6.2) comprises an arc-shaped block (6a) and two protruding blocks (6b, 6a) spaced apart from the arc-shaped block (6a), with the arc-shaped block (6a) being inserted in a play between tail portions of the two wedge segments (5.1, 5.2); and the elastic member (9) includes two split-type elastic elements, which are mounted on the two wedge segments (5.1, 5.2) respectively and retained between the arc-shaped block (6a) and the protruding blocks (6b, 6c).

## Description

### TECHNICAL FIELD

The present invention relates to a mechanism operating on the principle of a planetary gear train with small teeth difference, in particular to an angle adjustment device of a planetary gear train with small teeth difference.

### BACKGROUND ART

Currently, in the market of angle adjustment devices (hereinafter referred to as "recliners") for automotive seats in the industry, the design is generally based on the transmission principle of a planetary gear train with small teeth difference (which may also be referred to as "a planetary system with small teeth difference"); an eccentricity is achieved through eccentric wedge blocks, eccentric rings, or the like; and torque transmitted via cams further drives the movement of a gear pair. The existing mainstream products have the following common problems: 1) due to the tolerance design in manufacturing and installation of the recliner, as well as the locking requirements during non-adjustment periods, a design idle stroke may inevitably be generated, which may result in impact noise during startup and impact noise during adjustment and direction-reversal; 2) due to the manufacturing error and assembly error of the components, a mechanical backlash may inevitably be formed, which may bring irregular jitter, that is, unsmooth feeling, in the process of adjustment and operation.

### CONTENT OF THE INVENTION

In order to solve the problems of noise, jitter and the like in the prior art, the present invention provides an angle adjustment device of a planetary gear train with small teeth difference.

The angle adjustment device of a planetary gear train with small teeth difference according to the present invention comprises a wedge block, a drive cam and an elastic member, wherein the wedge block includes two wedge segments, for example, designed in mirror symmetry; the drive cam has a drive segment, for example, of a mirror-symmetrical design, which comprises an arc-shaped block and two protruding blocks spaced apart from the arc-shaped block, with the arc-shaped block being inserted in a play between tail portions of the two wedge segments; and the elastic member includes two split-type elastic elements, which are mounted on the two wedge segments respectively and retained between the arc-shaped block and the protruding blocks.

Preferably, an end surface of each protruding block facing the arc-shaped block is formed as a small end surface, end surfaces of the arc-shaped block facing the protruding blocks are formed as large end surfaces, an end surface of each elastic element facing a head portion of each wedge segment is formed as a front end surface, and an end surface of each elastic element facing a tail portion of each wedge segment is formed as a rear end surface; and each front end surface cooperates with the respective small end surface, while each rear end surface cooperates with the respective large end surface.

Preferably, each front end surface contacts the respective small end surface and is in a compressed state during operation, so as to provide a driving force for the respective wedge segment, such that the head portions of the two wedge segments remain spread apart to reach an eccentricity required by the angle adjustment device.

Preferably, during operation, selectively in accordance with a rotational direction, the front end surface of the elastic element at exact one side is pressed by the small end surface at said side due to rotation of the drive cam, thus providing a driving force for the wedge segment at said side. That is, when the drive cam rotates clockwise, it can drive the right wedge segment to move by (further) pressing the front end surface of the right elastic element; and when the drive cam rotates counterclockwise, it can drive the left wedge segment to move by (further) pressing the front end surface of the left elastic element.

Preferably, each rear end surface contacts the respective large end surface, so as to buffer a contact between the drive cam and the respective wedge block during start-up or a direction reversal.

Preferably, the rear end surface of each elastic element extends circumferentially beyond the tail portion of the respective wedge segment and thus is closer to the respective large end surface of the arc-shaped block, such that the rear end surface of the elastic element can elastically abut against the large end surface when the rear end surface and the large end surface move towards each other.

Here, when the drive cam rotates clockwise, the large end surface of the drive cam on the left side rotates towards the rear end surface of the left elastic element and elastically impacts on this rear end surface, and in some cases, the drive cam can continue to be in charge of driving the left wedge segment to move; when the drive cam rotates counterclockwise, the large end surface of the drive cam on the right side rotates toward the rear end surface of the right elastic element and elastically impacts on this rear end surface, and in some cases, the drive cam can continue to be in charge of driving the right wedge segment to move. This can avoid the impact noise generated by a rigid collision.

Preferably, each elastic element, when at rest, is held in a certain pre-compressed contact with the respective small end surface, and/or is not in contact with the respective large end surface. The pre-compressed contact between each elastic element and the small end surface in the static state enables relative fixation between the drive cam, the wedge segments and the elastic elements, as well as immediate driving of respective wedge segment upon start of the operation. An absence of contact between the elastic elements and the large end faces allows, when two drive cams are installed using a single synchronization rod, the drive cams to be rotated by a certain angle relative to the wedge segments if necessary, so as to make the drive cams concentric for installation.

Preferably, each wedge segment has a first groove and a second groove spaced apart by a boss, and each elastic element has a first boss and a second boss spaced apart by a recess, wherein the first bosses are received in the first grooves for engagement, and the second bosses are received in the second grooves for engagement.

Preferably, each protruding block is engaged in the first groove of the respective wedge segment.

Preferably, the angle adjustment device further comprises a cover plate mounted on the drive cam for restraining the elastic member.

Preferably, the angle adjustment device further comprises a gear plate and a gear ring plate rotatable relative to each other, wherein the gear plate has an externally toothed gear formed thereon, the gear ring plate has an internally toothed gear ring formed thereon, and the externally toothed gear and the internally toothed gear ring mesh with each other to form a gear pair of the planetary gear train with small teeth difference.

Preferably, the gear plate has a collar concentric to the externally toothed gear, and the wedge block for achieving an eccentricity of the gear pair of the planetary gear train with small teeth difference is supported on the collar by its curved inner surface and bears the gear ring plate by its curved outer surface, thereby achieving an eccentric effect by means of the inner curved surface and the outer curved surface.

Preferably, the angle adjustment device further comprises a spring disposed between the two wedge segments for spreading them apart from each other.

In the angle adjustment device according to the present invention, the drive mechanism for the gear pair of the planetary gear train with small teeth difference comprises the elastic member disposed in an eccentric region. During start-up or direction-reversal, the drive cam is accelerated by the external driving force in the idle stroke, and the elastic member provides buffering before contact, effectively reducing the impact noise generated by start-up and direction-reversal; in the operational process, the elastic member is in a compressed state, so that a spreading force within a certain range is maintained between the two eccentric wedge segments (the spring is not compressed by the driving force here, so that the spreading force can be ensured) to absorb mechanical backlash, thereby improving anti-jitter smoothness. As the drive structure is of a mirror design for bidirectional operation, the same effect of improving smoothness can be achieved whether the mechanism rotates clockwise or counterclockwise.

### BRIEF DESCRIPTION OF THE DRAWINGS

FIG. 1 is an exploded view of a recliner according to a preferred embodiment of the present invention.
FIG. 2 is a schematic view showing the assembling of a wedge block and an elastic member of FIG. 1.
FIG. 3 is a schematic view showing the assembling of a wedge block, a drive cam and an elastic member of FIG. 1.
FIG. 4 is a schematic view showing that a wedge block, a drive cam, an elastic member and a cover plate of FIG. 1 are in an assembled state.
FIG. 5 is a schematic structural view of FIG. 4 with the elastic member omitted.

### EMBODIMENTS

Preferred embodiments of the present invention will be described in detail below with reference to the accompanying drawings.

The angle adjustment device based on the planetary gear train with small teeth difference according to the present invention is an electric or manual recliner, such as a seat backrest recliner, an armrest recliner and a legrest recliner. It should be understood that this angle adjustment device is primarily intended for use in automotive seats, but may also be used in furniture seats, special cabin seats, etc.

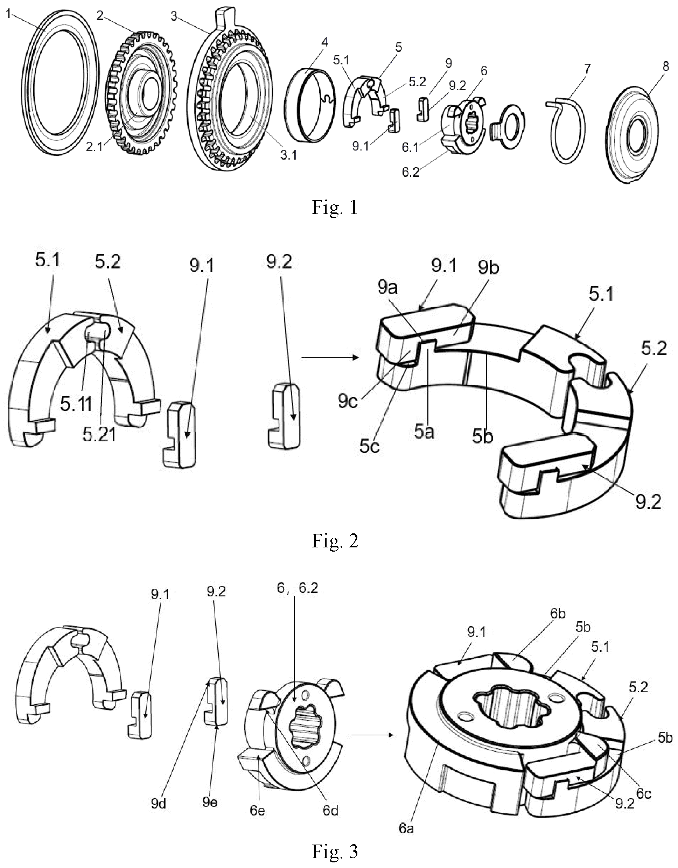

As shown in FIG. 1, a recliner according to a preferred embodiment of the present invention comprises a hoop 1, a gear plate 2 and a gear ring plate 3, wherein the gear plate 2 and the gear ring plate 3 are arranged to be rotatable in relation to each other, and the hoop 1 is used to retain the gear plate 2 and the gear ring plate 3 together. In the present embodiment, the hoop 1 for absorbing an axial acting force is fixedly connected to the gear ring plate 3. It shall be appreciated that the hoop 1 does not interfere with the relative rotation of the gear plate 2 and the gear ring plate 3. The gear plate 2 may be mounted to a seat, while the gear ring plate 3 may be mounted to a backrest, so as to adjust an inclination of the backrest with respect to the seat. Of course, the mounting positions of the gear plate 2 and the gear ring plate 3 may also be interchanged, i.e. the gear plate 2 may be mounted to the backrest and the gear ring plate 3 may be mounted to the seat.

The gear plate 2 and the gear ring plate 3 are connected to each other by means of a gear pair for adjustment and fixation. In order to form the gear pair connection, an externally toothed gear is formed on the gear plate 2, an internally toothed gear ring is formed on the gear ring plate 3, and the externally toothed gear and the internally toothed gear ring are meshed with each other to form the gear pair of the planetary gear train with small teeth difference, namely, an addendum circle formed by external teeth of the externally toothed gear has a diameter smaller than that of a dedendum circle formed by internal teeth of the internally toothed gear ring by the height of at least one tooth. The externally toothed gear and the internally toothed gear ring differ in the number of teeth by at least one tooth, which allows the internally toothed gear ring to perform a rolling movement on the externally toothed gear.

The gear plate 2 has a collar 2.1 concentric to the externally toothed gear. The recliner according to the present embodiment further comprises a wedge block 5 for achieving an eccentricity of the gear pair of the planetary gear train with small teeth difference, wherein the wedge block 5 is supported on the collar 2.1 via its curved inner surface and bears the gear ring plate 3 via its curved outer surface, thereby to achieve an eccentric effect via the inner curved surface and the outer curved surface. Correspondingly, the recliner according to the present embodiment further comprises a friction bearing 4 disposed between the outer curved surface of the wedge block 5 and a central hole 3.1 of the gear ring plate 3. In addition, the recliner according to this embodiment further comprises a drive cam 6, an axially-protruding cylindrical segment 6.1 of which is inserted in the collar 2.1, and the drive cam 6 is centrally provided with a bore hole (not limited to spline profiles) for receiving and matching a drive shaft so as to enable actuation of the drive cam 6 via the drive shaft. Moreover, the drive cam 6 further includes a drive segment 6.2 of a mirror-symmetrical design (per se) for transmitting an external driving force to drive the wedge block 5 to operate and thus complete the operation of the gear pair. It is also conceivable that the drive segment 6.2 may be designed in a non-mirror-symmetrical manner, as long as its function can be achieved. The wedge block 5 includes two wedge segments (i.e. a left wedge segment 5.1 and a right wedge segment 5.2) of mirror-symmetrical design (relative to each other), and the drive segment 6.2 of the drive cam 6 is inserted into a play between narrow sides (also referred to as tail portions) of the two wedge segments. It is also conceivable that the two wedge segments may be designed in a non-mirror-symmetrical manner, as long as their function can be achieved. Moreover, the recliner according to this embodiment further comprises a spring 7, two ends of which are connected to the mutually-facing wide sides (also referred to as head portions) of the two wedge segments respectively. Specifically, the two ends of the spring 7 are inserted into two notches 5.11 and 5.21 facing each other in the two wide sides respectively, so that the two wedge segments are forced apart by the spring 7 acting on the wedge segments in a circumferential direction. The requirement for variable eccentricity in the operational process of the recliner can be met immediately by adjusting the distance between the head portions of the two wedge segments. As such, the wedge block 5 and the spring 7 corporate to define an eccentric member for pressing the externally toothed gear of the gear plate 2 into the internally toothed gear ring of the gear ring plate 3 at the meshing position. In some embodiments, more than two wedge segments are also conceivable, and a spring 7 may be disposed between every two adjacent wedge segments. Further, the recliner according to the present embodiment further includes a cover plate 8, which covers the drive cam 6 and is fixedly connected to the gear ring plate 3.

The specific operational principle of the recliner according to the present embodiment includes: in the process of driving by rotation of the drive shaft, torque is first transmitted to the drive cam 6 and then, via the drive segment 6.2, to the eccentric member (formed by the wedge block 5 and the spring 7); the eccentric member slides along the friction bearing 4, such that the eccentric direction thereof is offset, and thus the position where the externally toothed gear of the gear plate 2 is meshed with the internally toothed gear ring of the gear ring plate 3 is offset, thereby enabling a continuously variable adjustment of the inclination of the backrest.

As shown in FIG. 1, the recliner according to the embodiment further comprises an elastic member 9 consisting of two split-type elastic elements (a left rubber member 9.1 and a right rubber member 9.2) designed in mirror symmetry, which are mounted on the left wedge segment 5.1 and the right wedge segment 5.2 of the wedge block 5, respectively. It should be understood that the elastic member 9 is not limited to the rubber members shown, but may also be a spring or other elastic members, and that the left rubber member 9.1 and the right rubber member 9.2 may also be of an asymmetrical design.

As shown in FIG. 2, the wedge segments 5.1, 5.2 are each formed on their upper surfaces with a first groove 5b and a second groove 5c spaced apart by a boss 5a, wherein a depression depth of the first groove 5b is smaller than that of the second groove 5c. In other embodiments, the depression depth of the first groove 5b may be greater than or equal to that of the second groove 5c. The rubber members 9.1, 9.2 are each formed on their lower surfaces with a first boss 9b and a second boss 9c spaced apart by a recess 9a, wherein a protruding height of the first boss 9b is smaller than that of the second boss 9c. In other embodiments, the protruding height of the first bosses 9b may be greater than or equal to the that of the second bosses 9c. The first boss 9b is received in the first groove 5b for engagement, and the second boss 9c is received in the second groove 5c for engagement. In this way, the rubber members 9.1, 9.2 are positioned and mounted on the wedge segments 5.1, 5.2.

As shown in FIG. 3, the drive segment 6.2 of the drive cam 6 comprises an arc-shaped block 6a, a first protruding block 6b and a second protruding block 6c, wherein the arc-shaped block 6a and the first protruding block 6b are spaced apart from each other in order to accommodate the left rubber member 9.1, and the arc-shaped block 6a and the second protruding block 6c are spaced apart from each other in order to accommodate the right rubber member 9.2. In the assembled state, the arc-shaped block 6a is located in a play between the tail portions of the left wedge segment 5.1 and the right wedge segment 5.2, the first protruding block 6b is engaged in the first groove 5b of the left wedge segment 5.1, and the second protruding block 6c is engaged in the first groove 5b of the right wedge segment 5.2.

End surfaces of the protruding blocks 6b, 6c facing the arc-shaped block 6a are formed as small end surfaces 6d, and end surfaces of the arc-shaped block 6a facing the protruding blocks 6b, 6c are formed as large end surfaces 6e. End surfaces of the rubber members 9.1, 9.2 facing the head portions of the wedge segments 5.1, 5.2 are formed as front end surfaces 9d, and end surfaces of the rubber members 9.1, 9.2 facing the tail portions of the wedge segments 5.1, 5.2 are formed as rear end surfaces 9e. The left rubber member 9.1 and the right rubber member 9.2 are each integrally formed herein, but it is also conceivable that they are each formed in two parts, namely each front end surface 9d is formed on a respective front part and each rear end surface 9e is formed on a respective rear part. The two parts may be fixed separately to the left wedge segment 5.1 or the right wedge segment 5.2, respectively, but these two separate parts should still be considered together as one left rubber member 9.1 (left elastic element) or one right rubber member 9.2 (right elastic element). Through the contact between the front end surface 9d and the small end surface 6d, the front end surface 9d is kept in a compressed state during operation, providing a driving force for the wedge segments 5.1, 5.2 below, so that the head portions of the two wedge segments 5.1, 5.2 are kept spread apart to reach the eccentricity required by the recliner. It should be understood that during operation, i.e. when the drive cam 6 rotates clockwise or counterclockwise, at any moment, only the front end surface 9d of the elastic member (or rubber member 9.1 or 9.2) at one single side is pressed by the small end surface 6d at said side due to rotation of the drive cam 6, and provides a driving force for the wedge segment 5.1 or 5.2 below the rubber member 9.1 or 9.2 at said side; when the operation is reversed, the function is also switched to the other side, namely, the front end surface 9d of the elastic member (or the rubber member 9.2 or 9.1) on the other side is pressed by the small end surface 6d on the other side due to rotation of the drive cam 6, and provides a driving force for the wedge segment 5.2 or 5.1 below the rubber member 9.2 or 9.1 on the other side. Furthermore, the rear end surface 9e comes into contact with the large end surface 6e, for example, when the drive cam 6 rotates, and provides buffering for the contact between the drive cam 6 and the wedge block 5 during start-up or direction-reversal of the recliner. It will be appreciated that the elastic member 9 may be designed to bear, for example, a predetermined amount of compression applied by the small end surface 6d, which can achieve a more obvious effect.

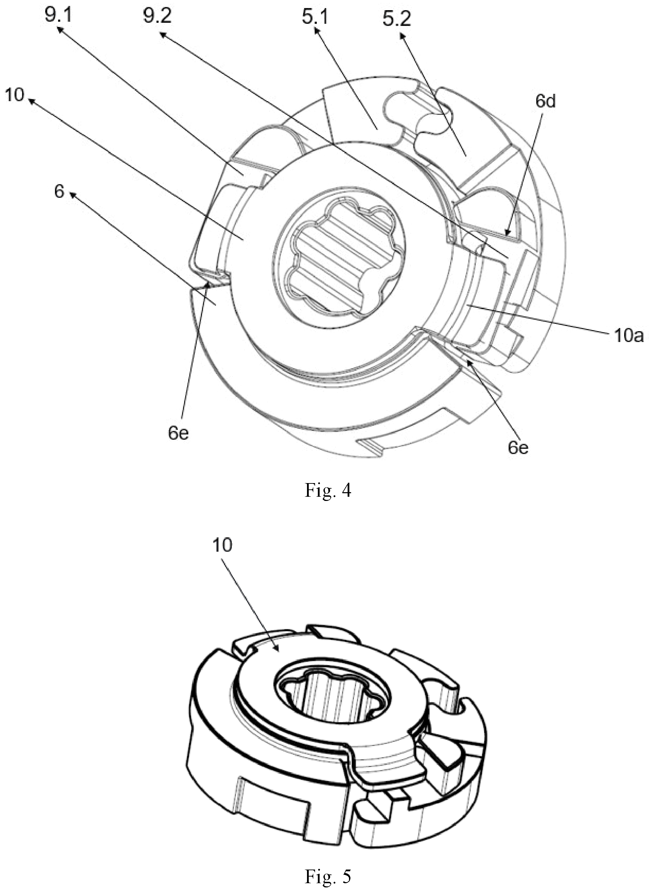

As shown in FIGS. 1, 4 and 5, the recliner according to the embodiment further includes a cover plate 10, which is mounted on the drive cam 6 and mainly functions to restrain the elastic member 9 so as to retain it in an active region. In particular, the cover plate 10 is provided with two lugs 10a extending radially outwards, which are pressed against the rubber members 9.1, 9.2 to exert an effect, respectively. In addition, the cover plate 10 can also limit the deformation amount of the elastic member 9, and has an effect of improving the elasticity. It shall be understood that the cover plate 10 may be made of metal, plastic or other materials.

When the recliner is static, all components of the drive mechanism are kept in a static balanced state. At this time, the rubber members 9.1, 9.2 are kept in a pre-compressed contact with the small end surfaces 6d (this, for example, can achieve a better driving effect) but are not in contact with the large end surfaces 6e. In other embodiments, the rubber members 9.1, 9.2 and the small end surfaces 6d may be designed to have no pre-compressed contact therebetween, or be spaced apart from each other at a distance. The circumferential distances between the large end surfaces 6e and the tail portions of the wedge segments 5.1, 5.2 are referred to as an idle stroke.

When the drive mechanism of the recliner is started clockwise, the drive cam 6 rotates clockwise, compression of the respective small end surface 6d against the right rubber member 9.2 increases, the right rubber member 9.2 transmits force to the right wedge segment 5.2 below to form a driving force for the right wedge segment 5.2, and the driving force is continuously increased along with the rotation of the drive cam 6. When the drive cam 6 rotates to a position where it is about to contact the tail portion of the left wedge segment 5.1, the elastic compressed contact between the left rubber member 9.1 and the large end surface 6e of the drive cam 6 buffers the impact on the tail portion of the left wedge segment 5.1 by the large end surface 6e, and reduces the impact noise upon start-up. This can also be seen in FIGS. 2 and 3, where the rear end surfaces 9e of the rubber members 9.1, 9.2 extend circumferentially beyond the tail portions of the wedge segments 5.1 or 5.2 and thus are closer to the large end surface 6e. Thus, the respective rear end surface 9e of the rubber member 9.1, 9.2 can elastically abut against the respective large end surface 6e when the rear end surface 9e and the large end surface 6e move towards each other, thereby preventing the respective tail portion of the wedge segment 5.1 or 5.2 from first colliding with the large end surface 6e and generating impact noise.

During the clockwise operation, the large end surface 6e pushes the tail portion of the left wedge segment 5.1 forward. As the driving force transmitted from the right rubber member 9.2 (combined with the inherent pre-tightening force of the spring 7) can balance the operational friction force of the right wedge segment 5.2, the right wedge segment 5.2 can be driven without requiring the left wedge segment 5.1 to contact it through the spring 7 to generate a thrust therefor, so that the head portions of the wedge segments 5.1 and 5.2 can always be kept at a proper distance to meet the real-time eccentricity required by the operation of the recliner. This is the principle for real-time elimination of the influence of mechanical backlash on the eccentricity, thereby eliminating the phenomenon of jitter caused by mechanical backlash.

When it is reversed from clockwise to anticlockwise rotation, the idle stroke of the mechanism reaches its maximum, the impact of the drive cam 6 on the tail portion of the right wedge segment 5.2 becomes stronger. The right rubber member 9.2 is pressed against the large end surface 6e, providing a buffering effect and reducing impact noise upon direction-reversal. Obviously, in the process of anticlockwise operation, the above-mentioned functions of reducing impact noise, eliminating backlash and improving smoothness are consistent with those during clockwise operation, thereby providing bidirectional and full-stroke corresponding functions.

In the prior art, the elastic member and the driving process implemented by the elastic member in the present invention are not provided. Instead, for example, during the clockwise operation, the drive cam 6 directly contacts and drives the left wedge segment 5.1 (for example, the tail portion thereof) to rotate clockwise, and the left wedge segment 5.1 then transmits the driving force to the right wedge segment 5.2 by compressing the spring 7 to drive the right wedge segment 5.2 to rotate clockwise as well. However, on the one hand, this results in direct impact noise due to the absence of elastic buffer between the drive cam 6 and the left wedge segment 5.1. On the other hand, the spring 7 may be excessively compressed during the transmission of the driving force, causing the distance between the head portions of the two wedge segments 5.1, 5.2 to become too small to normally compensate for the mechanical backlash, thereby leading to jitter caused by the mechanical backlash. In contrast, in the present invention, the elastic member and the drive by using the elastic member as one link of the drive chain can achieve: on one hand, the rigid impact between the drive cam 6 and the tail portions of the wedge segments 5.1, 5.2 is avoided, providing elastic buffering upon impact; on the other hand, it ensures that the spring 7 is not compressed by the driving force, thereby maintaining the distance between the head portions of the two wedge segments 5.1, 5.2 and preventing the phenomenon of jitter.

The above description is only a preferred embodiment of the present invention, and is not intended to limit the scope of the present invention, and various modifications may be made to the above-described embodiment of the present invention. All simple and equivalent changes and modifications made according to the claims and the content of the description of the present invention are within the scope of the claims of the present invention. Any detail portions not elaborated upon in the present invention belong to conventional technical content.

## Claims

1. An angle adjustment device of a planetary gear train with small teeth difference, **characterized in that** the angle adjustment device comprises a wedge block, a drive cam and an elastic member, wherein the wedge block includes two wedge segments; the drive cam has a drive segment, which comprises an arc-shaped block and two protruding blocks spaced apart from the arc-shaped block, with the arc-shaped block being inserted in a play between tail portions of the two wedge segments; and the elastic member includes two split-type elastic elements, which are mounted on the two wedge segments respectively and retained between the arc-shaped block and the protruding blocks.

2. The angle adjustment device according to claim 1, **characterized in that** the two wedge segments are designed in mirror symmetry, and/or the drive segment is of a mirror-symmetrical design.

3. The angle adjustment device according to claim 1, **characterized in that** an end surface of each protruding block facing the arc-shaped block is formed as a small end surface, end surfaces of the arc-shaped block facing the protruding blocks are formed as large end surfaces, an end surface of each elastic element facing a head portion of each wedge segment is formed as a front end surface, and an end surface of each elastic element facing a tail portion of each wedge segment is formed as a rear end surface; and each front end surface cooperates with the respective small end surface, while each rear end surface cooperates with the respective large end surface.

4. The angle adjustment device according to claim 3, **characterized in that** each front end surface contacts the respective small end surface and is in a compressed state during operation, so as to provide a driving force for the respective wedge segment, such that the head portions of the two wedge segments remain spread apart to reach an eccentricity required by the angle adjustment device.

5. The angle adjustment device according to claim 3, **characterized in that** during operation, selectively in accordance with a rotational direction, the front end surface of the elastic element at exact one side is pressed by the small end surface at said side due to rotation of the drive cam, thus providing a driving force for the wedge segment at said side.

6. The angle adjustment device according to claim 3, **characterized in that** each rear end surface contacts the respective large end surface, so as to buffer a contact between the drive cam and the respective wedge block during start-up or a direction reversal.

7. The angle adjustment device according to claim 3, **characterized in that** the rear end surface of each elastic element extends circumferentially beyond the tail portion of the respective wedge segment and thus is closer to the respective large end surface of the arc-shaped block, such that the rear end surface of the elastic element can elastically abut against the large end surface when the rear end surface and the large end surface move towards each other.

8. The angle adjustment device according to claim 3, **characterized in that** each elastic element, when at rest, is held in a certain pre-compressed contact with the respective small end surface, and/or is not in contact with the respective large end surface.

9. The angle adjustment device according to claim 1, **characterized in that** each wedge segment has a first groove and a second groove spaced apart by a boss, and each elastic element has a first boss and a second boss spaced apart by a recess, wherein the first bosses are received in the first grooves for engagement, and the second bosses are received in the second grooves for engagement.

10. The angle adjustment device according to claim 9, **characterized in that** each protruding block is engaged in the first groove of the respective wedge segment.

11. The angle adjustment device according to claim 1, **characterized in that** the angle adjustment device further comprises a cover plate mounted on the drive cam for restraining the elastic member.

12. The angle adjustment device according to claim 1, **characterized in that** the angle adjustment device further comprises a gear plate and a gear ring plate rotatable relative to each other, wherein the gear plate has an externally toothed gear formed thereon, the gear ring plate has an internally toothed gear ring formed thereon, and the externally toothed gear and the internally toothed gear ring mesh with each other to form a gear pair of the planetary gear train with small teeth difference.

13. The angle adjustment device according to claim 12, **characterized in that** the gear plate has a collar concentric to the externally toothed gear, and the wedge block for achieving an eccentricity of the gear pair of the planetary gear train with small teeth difference is supported on the collar by its curved inner surface and bears the gear ring plate by its curved outer surface, thereby achieving an eccentric effect by means of the inner curved surface and the outer curved surface.

14. The angle adjustment device according to claim 1, **characterized in that** the angle adjustment device further comprises a spring disposed between the two wedge segments for spreading them apart from each other.
